# FASCICULE DE BREVET EUROPEEN

(11) **EP 2 191 744 B1**
(45) Date de publication et mention de la délivrance du brevet: **12.04.2017**
(21) Numéro de dépôt: 09177180.8
(22) Date de dépôt: 26.11.2009
(51) Int. Cl.: A47B 47/02, B65G 1/02

(54) **Profil de reprise de charges**
Lastaufnahmefähiges Profil
Load taking profile

(30) Priorité: 27.11.2008 FR 0858048
(43) Date de publication de la demande: 02.06.2010
(73) Titulaire: Fimbault, Serge, 33230 Saint Médard de Guizières (FR)
(72) Inventeur: Fimbault, Serge, 33230 Saint Médard de Guizières (FR)
(74) Mandataire: Ipside

(56) Documents cités:
- DE-C- 851 905
- FR-A- 1 386 729

## Description

La présente invention concerne un profil de reprise de charges notamment pour la reprise de charges excentrées. L'invention vise également une structure rigide équipée d'au moins un tel profil.

On connaît des structures de rayonnage destinées au stockage de produits. Ces rayonnages comprennent typiquement des chevalets disposés à intervalles réguliers et reliés entre eux par des contreventements transversaux qui assurent la stabilité de la structure.

Les produits généralement lourds sont parfois disposés sur palettes et manipulés par des chariots à fourches télescopiques.

Ces produits sont alors stockés sur des bras qui sont supportés par des colonnes.

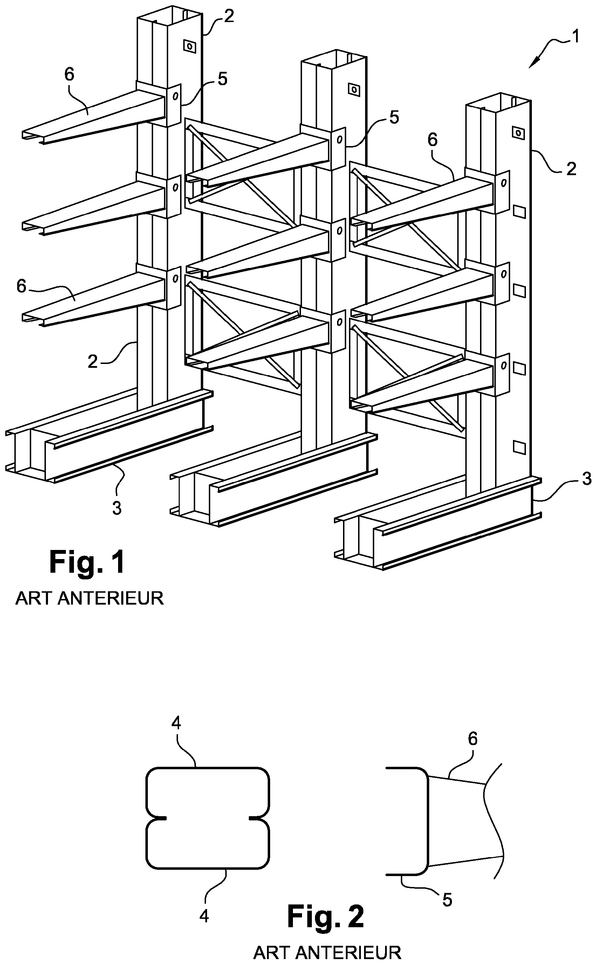

Les Figures 1 et 2 montrent une structure de rayonnage de l'art antérieur. Chaque chevalet 1 comporte une colonne 2 et une embase 3 horizontale placée à la base de cette colonne 2.

La colonne 2 consiste ici en un profil métallique à section rectangulaire obtenu par la soudure de deux profils 4 en forme de C.

Sur une façade extérieure de cette colonne 2 sont reçues les brides 5 de fixation de bras 6 formés eux aussi par des profils en forme de C contracturé.

Les bras 6 sont placés à des hauteurs différentes de sorte que les charges sont reçues individuellement à des étages de stockage différents.

Bien que ce type de structure donne des résultats satisfaisants, le coût de fabrication d'une telle structure est très important. Cette structure nécessite en effet non seulement la soudure des deux profils 4 en forme de C sur toute la hauteur de la colonne 2 mais également la réalisation de profil reconstitué en fonction de la charge appliquée sur le bras que supporte la colonne.

Or ces profils ne sont pas optimisés et présentent un poids élevé. Il en résulte également une consommation d'acier très grande qui est contraire aux intérêts économiques du fabricant.

L'élévation d'une telle structure est également consommatrice de temps et nécessite la mobilisation de personnels qualifiés.

De plus, lorsque la charge destinée à être reçue par le bras est placée de manière excentrée suite à une erreur de positionnement humaine, on observe alors des sollicitations très importantes sur le rayonnage.

Ces sollicitations mécaniques sont susceptibles d'endommager la structure.

Il en est de même lorsque ces rayonnages reçoivent des produits de grande dimension longitudinale.

En effet, la colonne a souvent un profil déterminé en fonction de la charge appliquée sur le bras que supporte la colonne en une position donnée du bras.

Or, avec ces produits longs, les charges sont alors placées en porte-à-faux avec le risque inhérent d'endommager la structure de rayonnage.

Par ailleurs, on a constaté que les bras pouvaient être endommagés lors d'une fausse manoeuvre du chariot élévateur.

En effet, lorsque les fourches du chariot passent sous un bras par inadvertance, elles peuvent entrer en contact avec celui-ci et exercer une force vers le haut propre à plier le bras.

Il est alors nécessaire de procéder au démontage de ce bras et à son remplacement ce qui peut s'avérer long et coûteux.

On connaît encore du document DE 851 905 des parois, particulièrement adaptées pour une utilisation dans des véhicules, constituées de deux panneaux ondulés reliés entre eux de sorte que ces ondulations forment des poches intérieures inclinées par rapport à l'axe longitudinal de ces parois. De telles parois sont mises en oeuvre pour la réalisation de poutre-caisson de section de préférence fermée.

Toutefois, on constate que ces poutre-caissons sont lourdes.

L'objectif de la présente invention est donc de proposer un profil, simple dans sa conception et dans son mode opératoire, d'un coût faible et facile à monter, pour permettre la construction économique et rapide de structures rigides, notamment de structures de rayonnage.

Un autre objet de la présente invention est un profil particulièrement léger et qui pourtant présente une très haute résistance mécanique pour reprendre les efforts qui lui sont appliqués notamment dans le cas de charges localisées excentrées s'appliquant sur des bras que le profil supporte.

A cet effet, l'invention concerne un profil de reprise de charges tel que décrit dans l'objet de la revendication 1.

Les surfaces de contact définies par les saillies sont contenues dans un même plan qui est parallèle, aux précisions de construction près, au plan passant par les surfaces de contact définies par les creux.

Ce sont avantageusement au moins certaines de ces surfaces de contact définies par les creux et les saillies qui sont solidarisées aux profils ouverts des semelles.

Ainsi lorsque la semelle a un profil ouvert creux en forme de U, l'amplitude des saillies et des creux est telle qu'au moins certaines des surfaces de contact de l'âme sont plaquées contre les bras du U lorsque les bords latéraux de cette âme sont insérés dans les semelles.

La solidarisation peut être réalisée de différentes manières (soudage, fusion, brasage, vissage, rivetage ou collage) en fonction des contraintes mécaniques que devra reprendre le profil de l'invention, lesquelles sont fonction de sa destination.

Dans le cas d'un profil métallique tel qu'en aluminium, titane ou des alliages tels que l'acier, l'acier inoxydable, destiné à être mis en oeuvre en tant que profil de reprise de charges excentrées, la solidarisation de l'âme aux semelles est de préférence réalisée par soudage.

Par ailleurs, on pourra choisir de solidariser les bords latéraux de l'âme aux semelles à l'entrée du profil creux ouvert, c'est-à-dire que les bords latéraux de l'âme ne sont que partiellement insérés dans les profils creux ouverts.

En effet, lorsque le profil de reprise de charges est mis en oeuvre en tant que poutre ou poteau, on cherchera à écarter au maximum les semelles l'une de l'autre en les reliant avec une âme comprenant un unique élément structurel longitudinal comportant des saillies et des creux placés en alternance tel que décrit plus haut. Cette âme pourra avoir l'épaisseur la plus faible possible.

Dans différents modes de réalisation particuliers de ce profil, chacun ayant ses avantages particuliers et susceptibles de nombreuses combinaisons techniques possibles:
- le profil creux ouvert comprenant une portion sensiblement en forme de U, les bras du U sont raccordés par des parties obliques à deux bords parallèles disposés à l'opposé de la base du U.

On a ainsi schématiquement un profil creux comprenant une portion en U à laquelle est raccordée au niveau de l'extrémité de ses bras une portion en Y, le pied de ce Y étant toutefois ouvert.
- les parties obliques font un angle compris entre 30° et 60° par rapport à un plan parallèle à la base du U et passant par les extrémités desdits bras du U,
- l'âme et les semelles étant métalliques, au moins certaines des surfaces de contact de l'âme sont solidarisées aux semelles par soudure,
- le profil étant une poutre, les surfaces de contact ont une dimension le long de l'axe longitudinal dudit élément structurel comprise entre 10 et 20 mm,

De préférence, cette valeur est de 15 mm +/- 10%.
- ledit profil étant un poteau, les surfaces de contact ont une dimension le long de l'axe longitudinal dudit élément structurel comprise entre 30 et 150 mm,

De préférence, cette valeur est comprise entre 30 et 100 mm.

L'invention concerne également un chevalet comprenant un profil tel que décrit précédemment, ce profil étant solidaire à une de ses extrémités d'au moins une embase qui peut être métallique ou en béton armé, ce chevalet comprenant également au moins un élément de support longitudinal ayant une face d'accouplement et des moyens pour raccorder amoviblement la face d'accouplement de cet élément longitudinal au profil.

Bien entendu, la face de réception de la semelle ayant une forme de U, la face d'accouplement de l'élément de support longitudinal est une bride ayant un profil ouvert en U, cette bride étant destinée à coiffer la semelle au niveau de sa face de réception.

Avantageusement, au moins une des semelles de ce profil comportant des paires de trous régulièrement espacés le long de l'axe longitudinal de l'élément structural, les trous étant placés en regard dans les bras du U, les moyens pour raccorder amoviblement la face d'accouplement au profil comportent des clavettes destinées à être insérées dans ces paires de trous.

De préférence, la face d'accouplement de cet élément longitudinal présente un évidement permettant un basculement de cet élément longitudinal en cas d'application sur celui-ci d'une force dirigée vers le haut. Ce basculement est notamment autorisé par la mise en oeuvre d'une clavette servant d'axe de rotation de l'élément longitudinal par rapport au profil de l'invention.

L'invention concerne encore une structure de rayonnage comportant au moins deux chevalets tels que décrits précédemment.

Cette structure de rayonnage est particulièrement adaptée au stockage de charges excentrées telles que des produits longs.

L'invention concerne aussi un bâtiment comportant au moins quatre chevalets tels que décrits précédemment.

Avantageusement, les chevalets de l'invention permettent de s'affranchir de fondation car les profils reprennent également les efforts s'appliquant sur la structure du bâtiment (vent, neige, ...).

A l'extrémité supérieure des profils, des éléments articulés de support de toiture peuvent par exemple être montés de manière à recevoir une toiture.

L'invention sera décrite plus en détail en référence aux dessins annexés dans lesquels:
- la figure 1 représente schématiquement une structure de rayonnage de l'art antérieur;
- la figure 2 est une vue partielle et en coupe d'une colonne et de la bride de fixation du bras de la Figure 1;
- la figure 3 représente schématiquement un profil selon un mode de réalisation préféré de l'invention;
- la figure 4 est une vue partielle et en coupe du profil de la Figure 3 selon l'axe A-A;
- la figure 5 est une vue partielle et en coupe d'une âme selon un mode de réalisation particulier de l'invention;
- la figure 6 montre une structure de stockage comprenant deux profils de la Figure 3 selon un mode de réalisation particulier de l'invention;
- la figure 7 montre une comparaison entre un profil de l'art antérieur et le profil de la Figure 3 dans un mode de mise en oeuvre particulier de l'invention;

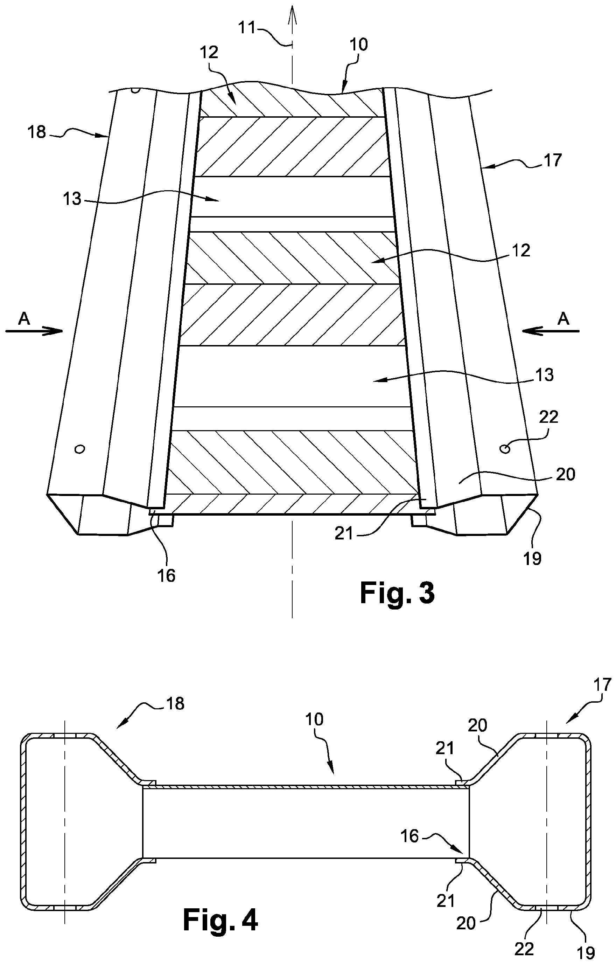

Les Figures 3 et 4 montrent schématiquement un profil qui est ici un poteau d'un chevalet destiné à recevoir des bras répartis à des hauteurs différentes du poteau pour former des étages de stockage distincts. Ces bras peuvent être disposés à des intervalles réguliers ou non.

Ce profil comprend une âme 10 qui est ici un élément structurel longitudinal nervuré ayant un axe longitudinal 11. Cet élément structurel nervuré permet de reprendre les efforts à intervalles réguliers d'un côté du profil ou de l'autre.

Le profil est ici réalisé intégralement en acier inoxydable.

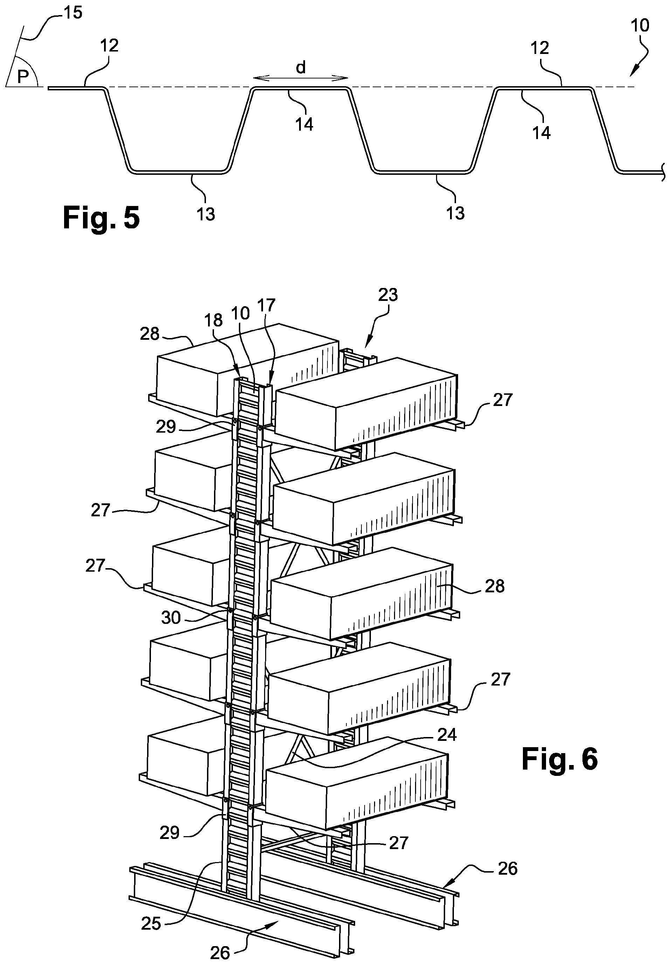

Comme le montre la Figure 5, cette âme 10 nervurée présente en conséquence, lorsqu'elle est vue de profil, une alternance de régions en saillie 12 et en creux 13.

Chaque saillie 12 et chaque creux 13 comprennent des surfaces de contact 14 qui sont respectivement placées dans un même plan P 15, les plans ainsi définis étant parallèles à l'axe longitudinal 11 de l'élément structurel.

Chacun des bords latéraux 16 de cette âme 10 est partiellement inséré dans une semelle 17, 18 correspondante placée perpendiculairement.

Ces semelles 17, 18 qui sont ici identiques comprennent chacune un profil creux ouvert.

Ce profil creux comprend une portion 19 sensiblement en forme de U, les bras du U étant raccordés par des parties obliques 20 à deux bords parallèles 21 disposés à l'opposé de la base du U.

Les surfaces de contact 14 des bords latéraux de l'âme 10 sont solidarisées par soudure avec les bords 21 parallèles du profil creux de sorte que la base du U est placée le plus à l'extérieur de ce profil.

Ces surfaces de contact 14 ont avantageusement une dimension d le long de l'axe longitudinal 11 de l'élément structurel comprise entre 30 et 150 mm de manière à assurer le meilleur transfert des efforts possible.

De plus, l'âme 10 étant partiellement insérée dans ces semelles 17, 18, le profil creux comporte dans sa portion 19 en forme de U des paires de trous 22 destinées à recevoir chacune des moyens pour raccorder amoviblement la face d'accouplement d'un bras au profil.

Ces moyens de fixation amovible étant des clavettes, les trous 22 d'une même paire sont placés en regard dans les bras du U.

Le pas entre deux paires de trous consécutives est ici un multiple entier k du pas de des nervures avec k = 2.

La Figure 6 montre une structure de rayonnage selon un mode de réalisation particulier de l'invention. Cette structure de rayonnage comprend deux chevalets 23 identiques espacés l'un de l'autre et placés en regard pour définir une surface de stockage.

Ces chevalets 23 sont reliés entre eux par des croisillons 24 assurant la stabilité de la structure.

Bien entendu, l'espacement entre ces chevalets 23 est variable en fonctions des dimensions des charges à stocker.

Chaque chevalet 23 comprend un profil 24 tel que décrit précédemment. Ces profils 25 ne seront donc décrits de nouveau ci-dessous.

Chaque profil 25 est solidaire à son extrémité inférieure à deux embases 26 qui peuvent être métalliques ou en béton armé. Ces embases 26 sont disposées de part et d'autre du profil de sorte que l'ensemble profil/embases forme un T inversé.

Des bras 27 sont répartis régulièrement sur la hauteur de chaque profil 25 pour définir des étages de stockage destinés à recevoir chacun une charge 28, ici par exemple un bloc de béton.

Les bras 27 sont ici des profils en acier inoxydable ayant une forme de C. A l'extrémité de ce bras 27 est placée une bride de fixation 29 ayant une forme en U destinée à venir coiffer la portion de réception 19 en forme de U d'une semelle correspondante du profil 25.

Cette bride de fixation 29 comporte, bien entendu, une paire de trous, lesquels sont destinés à venir en regard des trous correspondant de la semelle 17, 18 pour le passage d'une clavette 30.

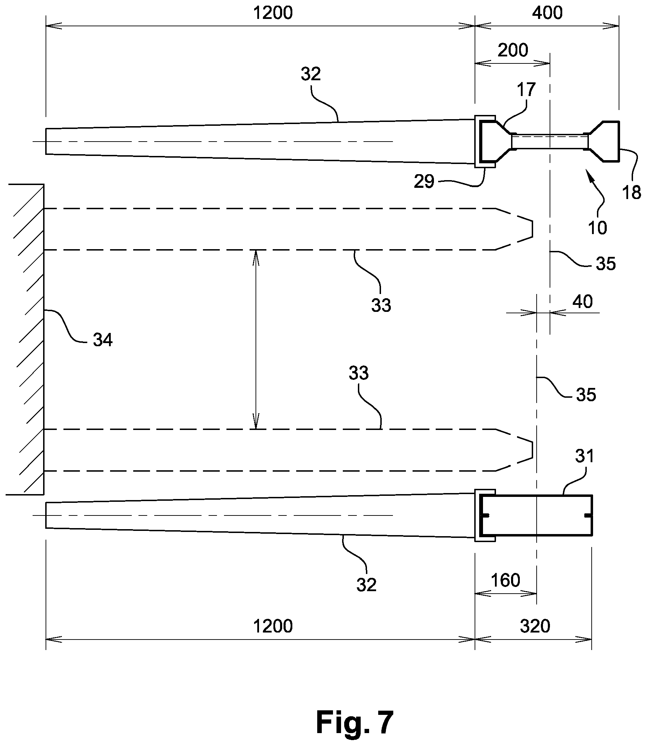

Notons que La figure 7 montre une comparaison entre un profil de l'art antérieur et le profil de la Figure 3 afin de faire ressortir les avantages de la présente invention.

Le profil 31 de l'art antérieur est un tube de section rectangulaire en acier de largeur 320 mm.

Le profil de la Figure 3 est ici en acier également et présente une largeur, c'est-à-dire une distance séparant les bases des U des semelles, de 400 mm.

Ces profils 10, 17, 18, 31 présentent tous les deux le même poids au mètre linéaire.

Chacun de ces profils 10, 17, 18, 31 reçoit un bras identique 32 de longueur 1200 mm.

Les fourches 33 d'un chariot élévateur 34 sont représentées de manière à montrer la distance séparant l'extrémité de ces fourches 33 avec l'axe médian 35 respectif de chaque profil par lequel passe un contreventement reliant deux chevalets ensembles.

Cette distance permet, en effet, d'apprécier les risques éventuels d'un choc entre les fourches 33 du chariot élévateur et le contreventement.

L'écart entre ces distances pour le profil de la Figure 3 et celui de l'art antérieur est ici de 40 mm.

Le profil de la Figure 3 qui est plus large que le profil de l'art antérieur pour des propriétés mécaniques supérieures à celles du profil de l'art antérieur, permet avantageusement de limiter les risques de collision entre l'extrémité des fourches 33 et le contreventement lors de l'exploitation de la structure de rayonnage.

A titre purement illustratif et dans un mode de mise en oeuvre donnée, les charges reçues étant chacune de 1700 kg, les bras sont espacés en hauteur régulièrement tous les 0,9 m, le premier bras étant placé à 1 m22 du sol sur lequel repose les embases en acier de hauteur 0,3 m.

Les bras qui sont en acier inoxydable ont chacun un profil en C de longueur 1m20. Les dimensions du profil sont de 40 cm de large pour 5m de long.

L'âme est formée par une tôle pliée ayant une épaisseur de 2 mm tandis que les semelles sont des tôles pliées d'épaisseur 3,3 mm.

Les surfaces de contact ont une dimension le long de l'axe longitudinal de l'âme égale à 50 mm.

Il ressort que le profil optimisé de la présente invention est apte à recevoir des charges élevées tout en étant léger puisqu'il nécessite moins de matière pour sa fabrication d'un profil de l'état de l'art.

## Revendications

1. Profil de reprise de charges comprenant une âme (10) et une semelle (17, 18) placée perpendiculairement à chacune des extrémités de ladite âme (10), **caractérisé en ce que**
- ladite âme (10) comprend un seul élément structurel longitudinal comportant des saillies (12) et des creux (13) placés en alternance, lesdites saillies (12) et lesdits creux (13) définissant respectivement des surfaces de contact (14) placées dans un même plan parallèle à l'axe longitudinal (11) dudit élément structurel, ladite âme (10) étant un élément longitudinal ondulé,
- chacune desdites semelles (17, 18) comporte un profil creux ouvert, ledit profil comprenant au moins une portion (19) sensiblement en U,
- ladite âme (10) a chacun de ses bords latéraux inséré partiellement dans un profil creux correspondant et solidarisé à ce dernier de sorte que la base du U est placée le plus à l'extérieur dudit profil, et
- au moins une desdites semelles (17, 18) comporte des paires de trous (22) régulièrement espacés le long de l'axe longitudinal (11) dudit élément structural, lesdits trous (22) étant placés en regard dans les bras du U, le pas entre deux paires de trous (22) consécutives étant un multiple entier k du pas de l'ondulation.

2. Profil selon la revendication 1, **caractérisé en ce que** ledit profil creux ouvert comprenant une portion (19) sensiblement en forme de U, lesdits bras du U sont raccordés par des parties obliques (20) à deux bords parallèles (21) disposés à l'opposé de la base du U.

3. Profil selon la revendication 1 ou 2, **caractérisé en ce que** lesdites parties obliques (20) font un angle compris entre 30° et 60° par rapport à un plan parallèle à la base du U et passant par les extrémités desdits bras du U.

4. Profil selon l'une quelconque des revendications 1 à 3, **caractérisé en ce que** ladite âme (10) et lesdites semelles (17, 18) étant métalliques, au moins certaines desdites surfaces de contact (14) de ladite âme (10) sont solidarisées auxdites semelles (17, 18) par soudure.

5. Profil selon l'une quelconque des revendications 1 à 4, **caractérisé en ce que** ledit profil étant une poutre, lesdites surfaces de contact (14) ont une dimension le long de l'axe longitudinal dudit élément structurel comprise entre 10 et 20 mm.

6. Profil selon l'une quelconque des revendications 1 à 4, **caractérisé en ce que** ledit profil étant un poteau, lesdites surfaces de contact (14) ont une dimension le long de l'axe longitudinal dudit élément structurel comprise entre 30 et 150 mm.

7. Chevalet comprenant un profil de reprise de charges selon l'une quelconque des revendications 1 à 6, ledit profil étant solidaire à une de ses extrémités d'au moins une embase (26), au moins un élément de support longitudinal (27) ayant une face d'accouplement (29) audit profil et des moyens pour raccorder amoviblement (30) ladite face d'accouplement de l'élément de support longitudinal (27) audit profil.

8. Chevalet selon la revendication 7, caractérisée en qu'au moins une des semelles (17, 18) dudit profil comportant des paires de trous (22) régulièrement espacés le long de l'axe longitudinal dudit élément structural, lesdits trous (22) étant placés en regard dans les bras du U, lesdits moyens pour raccorder amoviblement (30) ladite face d'accouplement audit profil comportent des clavettes destinées à être insérées dans lesdites paires de trous.

9. Structure de rayonnage comportant au moins deux chevalets selon la revendication 7 ou 8.

10. Bâtiment comportant au moins quatre chevalets selon la revendication 7 ou 8.

## Patentansprüche

1. Lastaufnahmefähiges Profil, umfassend einen Steg (10) und einen senkrecht zu jedem der Enden des Stegs (10) platzierten Flansch (17, 18), **dadurch gekennzeichnet, dass**
- der Steg (10) ein einziges längliches Strukturelement umfasst, das abwechselnd angeordnete Vorsprünge (12) und Vertiefungen (13) aufweist, wobei die Vorsprünge (12) und die Vertiefungen (13) jeweils Kontaktflächen (14) definieren, die in derselben Ebene parallel zu der Längsachse (11) des Strukturelements platziert sind, wobei der Steg (10) ein gewelltes längliches Element ist,
- jeder der Flansche (17, 18) ein offenes Hohlprofil aufweist, wobei das Profil mindestens einen im Wesentlichen U-förmigen Abschnitt (19) umfasst,
- jeder der Seitenränder des Stegs (10) teilweise in ein entsprechendes Hohlprofil eingeführt und mit diesem fest verbunden ist, so dass die Basis des U am Profil am weitesten außen platziert ist, und
- mindestens einer der Flansche (17, 18) Paare von Löchern (22) aufweist, die entlang der Längsachse (11) des Strukturelements gleichmäßig beabstandet sind, wobei die Löcher (22) einander gegenüber in den Schenkeln des U platziert sind, wobei die Schrittweite zwischen zwei aufeinanderfolgenden Paaren von Löchern (22) ein ganzzahliges Vielfaches k der Schrittweite der Wellung ist.

2. Profil nach Anspruch 1, **dadurch gekennzeichnet, dass** das offene Hohlprofil einen im Wesentlichen U-förmigen Abschnitt (19) umfasst, wobei die Schenkel des U über Schrägteile (20) mit zwei parallelen Rändern (21), die gegenüber der Basis des U angeordnet sind, verbunden sind.

3. Profil nach Anspruch 1 oder 2, **dadurch gekennzeichnet, dass** die Schrägteile (20) bezüglich einer parallel zu der Basis des U verlaufenden und durch die Enden der Schenkel des U gehenden Ebene einen Winkel zwischen 30° und 60° einnehmen.

4. Profil nach einem der Ansprüche 1 bis 3, **dadurch gekennzeichnet, dass** der Steg (10) und die Flansche (17, 18) metallisch sind und mindestens gewisse der Kontaktflächen (14) des Stegs (10) mittels Schweißens fest mit den Flanschen (17, 18) verbunden sind.

5. Profil nach einem der Ansprüche 1 bis 4, **dadurch gekennzeichnet, dass** die Kontaktflächen (14), wenn das Profil ein Träger ist, eine Abmessung entlang der Längsachse des Strukturelements zwischen 10 und 20 mm haben.

6. Profil nach einem der Ansprüche 1 bis 4, **dadurch gekennzeichnet, dass** die Kontaktflächen (14), wenn das Profil ein Tragpfosten ist, eine Abmessung entlang der Längsachse des Strukturelements zwischen 30 und 150 mm haben.

7. Gestell, umfassend ein lastaufnahmefähiges Profil nach einem der Ansprüche 1 bis 6, wobei das Profil an einem seiner Enden fest mit mindestens einem Sockel (26) verbunden ist, wobei mindestens ein längliches Stützelement (27) eine Fläche (29) zum Ankoppeln an das Profil sowie Mittel hat, um die Ankoppelfläche des länglichen Stützelements (27) lösbar (30) mit dem Profil zu verbinden.

8. Gestell nach Anspruch 7, **dadurch gekennzeichnet, dass** die Mittel zum lösbaren (30) Verbinden der Ankoppelfläche an das Profil, da mindestens einer der Flansche (17, 18) des Profils Paare von Löchern (22) aufweist, die entlang der Längsachse (11) des Strukturelements gleichmäßig beabstandet sind, wobei die Löcher (22) einander gegenüber in den Schenkeln des U platziert sind, Keile aufweisen, die dazu bestimmt sind, in die Löcherpaare eingeführt zu werden.

9. Regalstruktur, die mindestens zwei Gestelle nach Anspruch 7 oder 8 aufweist.

10. Konstruktion, die mindestens vier Gestelle nach Anspruch 7 oder 8 aufweist.

## Claims

1. Load bearing profile comprising a web (10) and a flansh (17, 18) placed perpendicularly at each of the ends of the said web (10), **characterized in that**
- the said web (10) comprises a single longitudinal structural element comprising projections (12) and recesses (13) positioned in alternation, the said projections (12) and the said recesses (13) respectively defining contact surfaces (14) placed in one and the same plane parallel to the longitudinal axis (11) of the said structural element, the said web (10) being a corrugated longitudinal element,
- each of the said flanshes (17, 18) has an open hollow profile, the said profile comprising at least one substantially U-shaped portion (19),
- the said web (10) has each of its lateral edges partially inserted in a corresponding hollow profile and secured thereto in such a way that the base of the U is placed furthest towards the outside of the said profile, and
- at least one of the said flanshes (17, 18) comprises pairs of holes (22) which are uniformly spaced along the longitudinal axis (11) of the said structural element, the said holes (22) being positioned facing each other in the arms of the U, the pitch spacing between two consecutive pairs of holes (22) being an integer multiple k of the pitch of the corrugation.

2. Profile according to Claim 1, **characterized in that**, with the said open hollow profile comprising a substantially U-shaped portion (19), the said arms of the U are connected by oblique parts (20) to two parallel edges (21) arranged at the opposite end to the base of the U.

3. Profile according to Claim 1 or 2, **characterized in that** the said oblique parts (20) make an angle of between 30° and 60° with respect to a plane parallel to the base of the U and passing through the ends of the said arms of the U.

4. Profile according to any one of Claims 1 to 3, **characterized in that**, with the said web (10) and the said flanshes (17, 18) being metallic, at least some of the said contact surfaces (14) of the said web (10) are secured to the said flanshes (17, 18) by welding.

5. Profile according to any one of Claims 1 to 4, **characterized in that**, with the said profile being a beam, the said contact surfaces (14) have a longitudinal dimension along the longitudinal axis of the said structural element of between 10 and 20 mm.

6. Profile according to any one of Claims 1 to 4, **characterized in that** with the said profile being a post, the said contact surfaces (14) have a dimension along the longitudinal axis of the said structural element of between 30 and 150 mm.

7. Cantilever rack comprising a load bearing profile according to any one of Claims 1 to 6, the said profile being secured at one of its ends to at least one base (26), at least one longitudinal support element (27) having a coupling face (29) for coupling to the said profile and means for removably connecting (30) the said coupling face of the longitudinal support element (27) to the said profile.

8. Cantilever rack according to Claim 7, **characterized in that**, with at least one of the flanshes (17, 18) of the said profile comprising pairs of holes (22) uniformly spaced along the longitudinal axis of the said structural element, and with the said holes (22) being placed facing one another in the arms of the U, the said means for removably connecting (30) the said coupling face to the said profile comprise pins intended to be inserted in the said pairs of holes.

9. Racking structure comprising at least two cantilever racks according to Claim 7 or 8.

10. Building comprising at least four cantilever racks according to Claim 7 or 8.
